# EUROPEAN PATENT SPECIFICATION

(11) **EP 2 056 592 B1**
(45) Date of publication and mention of the grant of the patent: **01.09.2010**
(21) Application number: 07119896.4
(22) Date of filing: 02.11.2007
(51) Int. Cl.: H04N 5/235

(54) **System and method for processing images captured using camera-equipped mobile devices**
System und Verfahren zur Verarbeitung von mit Mobilgeräten mit Kameras aufgenommenen Bildern
Système et procédé de traitement d'images capturées utilisant des dispositifs mobiles équipés de caméras

(43) Date of publication of application: 06.05.2009
(73) Proprietor: RESEARCH IN MOTION LIMITED, Waterloo, Ontario N2L 3W8 (CA)
(72) Inventor: Lazaridis, Mihal, Ontario N2T 2K1 (CA)
(74) Representative: Rickard, David John

(56) References cited:
- EP-A- 1 158 764
- WO-A-2007/067278
- US-A1- 2002 015 098
- US-A1- 2004 196 389
- US-B1- 6 539 169
- BARBARA BRUNDAGE: "Photoshop Elements 3: The Missing Manual" March 2005 (2005-03), O'REILLY MEDIA, INC. * abstract *
- APPLE COMPUTER, INC.: "MacBook Pro Users Guide" 2006, APPLE COMPUTER, INC. * abstract *

## Description

Embodiments described herein relate generally to the processing of images captured using a mobile device equipped with a camera, and more specifically to the processing of images for storage on the mobile device.

Digital cameras and, more particularly, mobile devices equipped with cameras (e.g. camera phones) that allow users to take pictures, are generally capable of capturing images at any of a number of resolutions, up to a maximum resolution associated with the given camera. These devices are typically configured so that a particular resolution is pre-identified using a configurable setting, whereby subsequently captured images are stored on the device at that particular resolution until the value of the resolution setting is changed. In most cases, the value of the resolution setting on a given device will be initially set to a default value, which can later be modified by a user.

Similarly, most known digital cameras and camera-equipped mobile devices also provide a compression level setting (commonly also referred to as a "quality" setting) that is user-configurable. The value of this setting determines the level of compression to be applied to a captured image before it is stored on the device (e.g. on a memory card or other non-volatile memory), and accordingly, the value of this setting will determine the amount of memory that will be required to store the image. As with the resolution setting, a default compression level will typically be initially defined on a given device, which can later be modified by a user. When the compression level setting is set to a particular value, the associated compression level is applied to subsequently captured images that are stored on the device until the compression level setting is changed.

### General

Picture quality settings, such as a resolution setting and a compression level setting for example, are typically set to certain values in advance of a user taking pictures with a camera or camera-equipped device. The user may reconfigure the device by modifying these settings to desirable values, given available memory and anticipated uses for to-be-captured images. Once the values of these picture quality settings have been set, a user can take multiple pictures quickly with minimal user intervention, for example.

However, in use, a user might take a particular picture, and then realize, too late, that the values of the picture quality settings ought to have been different for that picture. For example, after taking a picture that turned out unexpectedly good, the user may regret that the image was captured at too low of a resolution when, in retrospect, a higher resolution might have been desirable. As a further example, after taking a picture that did not turn out to be as good as expected but where the user nevertheless decides to have the image stored on the mobile device, the user may regret that the image was captured at too high of a resolution when, in retrospect, a lower resolution would have been desirable (e.g. to conserve memory).

US-A-2002/015098 discloses an image sensing system in which a user can designate the position of a cropping area in the image being displayed.

EP-A-1158764 discloses a system in which a user of a digital camera can select a resolution and quality level for an image prior to its capture.

US-B-6539169 discloses a digital camera in which all recording is done on a memory card. In this camera an image already captured can be re-recorded at a lower resolution.

Embodiments described herein are generally directed to a system and method that provides users of a camera-equipped mobile device with greater control over the processing of images captured with the camera of the mobile device.

The invention is set out in independent claim 1. In a broad example, there may be provided a method of processing images on a mobile device, the mobile device providing a camera, the method comprising: identifying an image to be stored on the mobile device, said image being displayed on a display of the mobile device, and receiving a direction to capture said image; storing the image in a volatile memory on the mobile device, wherein the image is stored at a first resolution associated with a first number of pixels; providing, after storing the image in the volatile memory on the mobile device and prior to storing the image in the non-volatile memory, at least one image storing option comprising an option for specifying a second resolution associated with a second number of pixels at which the image is to be stored in a non-volatile memory, wherein the second resolution is less than or equal to the first resolution; receiving input specifying the second resolution at which the image is to be stored in the non-volatile memory prior to storing the image in the non-volatile memory; and storing the image at the second resolution in the non-volatile memory after said input specifying the second resolution is received.

In another broad aspect, the first resolution may be a maximum resolution at which images can be stored on the camera.

In another broad aspect, the first resolution may be a maximum resolution at which an image can be stored on the camera at the time the image is captured, based on an amount of volatile memory available at the time the image is captured.

In another broad aspect there is also provided a computer-readable medium comprising instructions executable on a processor of a mobile device wherein the instructions, when executed by the processor, cause the mobile device to perform the acts of the method described above.

In another broad aspect there is also provided a system for processing images on a mobile device, the mobile device comprising a processor, at least first and second memories, and a camera, the system configured to execute an application programmed to cause the system to perform the acts of the method described above.

There is also provided a mobile device having the system described in the preceding paragraph.

These and other aspects and features of various embodiments will be described in greater detail below.

Some embodiments described herein may make use of a mobile station. A mobile station generally comprises a two-way communication device with advanced data communication capabilities having the capability to communicate with other devices, and is also referred to herein generally as a mobile device. A mobile device may also include the capability for voice communications. Depending on the functionality provided by a mobile device, it may be referred to as a data messaging device, a two-way pager, a cellular telephone with data messaging capabilities, a wireless Internet appliance, or a data communication device (with or without telephony capabilities). A mobile device may communicate with other devices through a network of transceiver stations.

### Brief Description of the Drawings

For a better understanding of embodiments described herein, and to show more clearly how they may be carried into effect, reference will now be made, by way of example, to the accompanying drawings in which:
FIG. 1 is a block diagram of a mobile device in one example implementation;
FIG. 2 is a block diagram of a communication subsystem component of the mobile device of FIG. 1;
FIG. 3 is a block diagram of a node of a wireless network;
FIG. 4 is a flowchart illustrating acts of a method of processing images captured using a camera-equipped mobile device in accordance with at least one embodiment; and
FIGS. 5A and 5B are examples of screenshots of a user interface displayed to a user of a camera-equipped mobile device in one exemplary implementation of an embodiment of the method of FIG. 4.

### Description of Preferred Embodiments

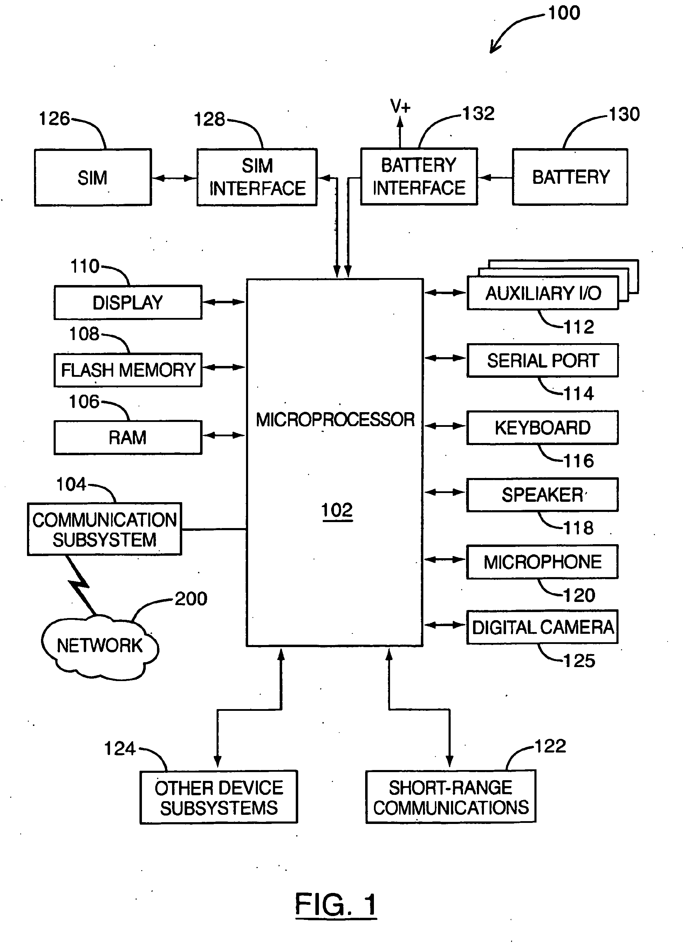

To aid the reader in understanding the structure of a mobile device and how it communicates with other devices, reference is made to FIGS. 1 through 3.

Referring first to FIG. 1, a block diagram of a mobile device in one example implementation is shown generally as 100. Mobile device 100 comprises a number of components, the controlling component being microprocessor 102. Microprocessor 102 controls the overall operation of mobile device 100. Communication functions, including data and voice communications, are performed through communication subsystem 104. Communication subsystem 104 receives messages from and sends messages to a wireless network 200. In one example implementation of mobile device 100, communication subsystem 104 may be configured in accordance with the Global System for Mobile Communication (GSM) and General Packet Radio Services (GPRS) standards. The GSM/GPRS wireless network is used worldwide and it is expected that these standards may be supplemented or superseded by Enhanced Data GSM Environment (EDGE), Universal Mobile Telecommunications Service (UMTS), and Ultra Mobile Broadband, etc. New standards are still being defined, but it is believed that they will have similarities to the network behaviour described herein, and it will also be understood by persons skilled in the art that the embodiments of the present disclosure are intended to use any other suitable standards that are developed in the future. The wireless link connecting communication subsystem 104 with network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network associated with mobile device 100 is a GSM/GPRS wireless network in one example implementation of mobile device 100, other wireless networks may also be associated with mobile device 100 in variant implementations. Different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some older examples of data-centric networks include the Mobitex^{™} Radio Network and the DataTAC^{™} Radio Network. Examples of older voice-centric data networks include Personal Communication Systems (PCS) networks like GSM and Time Division Multiple Access (TDMA) systems.

Microprocessor 102 also interacts with additional subsystems such as a Random Access Memory (RAM) 106, flash memory 108, display 110, auxiliary input/output (I/O) subsystem 112, serial port 114, keyboard 116, speaker 118, microphone 120, short-range communications subsystem 122 and other device subsystems 124.

In respect of embodiments described herein, microprocessor 102 also interacts with a digital camera 125. In exemplary embodiments, components of digital camera 125 are integrated in mobile device 100, although some or all of the components of digital camera 125 may be physically separated from, but coupled to, mobile device 100 in variant embodiments. Components of digital camera 125 will typically comprise a lens and one or more image sensors, as well as other components, as known in the art. When digital camera 125 is activated, by entering a digital camera mode for example, digital camera 125 is configured to capture images (e.g. color still-photo images and/or digital video images) in known manner. Captured images can be, for example, stored as image files in one or more memories (e.g. temporarily in RAM 106 or more persistently in flash memory 108 or some other memory) on or coupled to mobile device 100, viewed on display 110, and/or transmitted as image files over network 200 to a emote device [not shown].

Some of the subsystems of mobile device 100 perform communication-related functions, whereas other subsystems may provide "resident" or on-device functions. By way of example, display 110 and keyboard 116 may be used for both communication-related functions, such as entering a text message for transmission over network 200, and device-resident functions such as a calculator or task list. Operating system software used by microprocessor 102 is typically stored in a persistent store such as flash memory 108, which may alternatively be a read-only memory (ROM) or similar storage element (not shown). Those skilled in the art will appreciate that the operating system, specific device applications, or parts thereof, may be temporarily loaded into a volatile store such as RAM 106.

Mobile device 100 may send and receive communication signals over network 200 after required network registration or activation procedures have been completed. Network access is associated with a subscriber or user of a mobile device 100. To identify a subscriber, mobile device 100 may provide for a Subscriber Identity Module or "SIM" card 126 to be inserted in a SIM interface 128 in order to communicate with a network. SIM 126 is one type of a conventional "smart card" used to identify a subscriber of mobile device 100 and to personalize the mobile device 100, among other things. Without SIM 126, mobile device 100 is not fully operational for communication with network 200. By inserting SIM 126 into SIM interface 128, a subscriber can access all subscribed services. Services may include without limitation: web browsing and messaging such as e-mail, voice mail, Short Message Service (SMS), and Multimedia Messaging Services (MMS). More advanced services may include without limitation: point of sale, field service and sales force automation. SIM 126 includes a processor and memory for storing information. Once SIM 126 is inserted in SIM interface 128, it is coupled to microprocessor 102. In order to identify the subscriber, SIM 126 contains some user parameters such as an International Mobile Subscriber Identity (IMSI). An advantage of using SIM 126 is that a subscriber is not necessarily bound by any single physical mobile device. SIM 126 may store additional subscriber information for a mobile device as well, including datebook (or calendar) information and recent call information.

Mobile device 100 may be a battery-powered device and may include a battery interface 132 for receiving one or more rechargeable batteries 130. Battery interface 132 may be coupled to a regulator (not shown), which assists battery 130 in providing power V+ to mobile device 100. Although current technology makes use of a battery, future technologies such as micro fuel cells may provide the power to mobile device 100. In some embodiments, mobile device 100 may be solar-powered.

Microprocessor 102, in addition to its operating system functions, enables execution of software applications on mobile device 100. A set of applications that control basic device operations, including data and voice communication applications, may be installed on mobile device 100 during its manufacture. Another application that may be loaded onto mobile device 100 is a personal information manager (PIM). A PIM has functionality to organize and manage data items of interest to a subscriber, such as, but not limited to, e-mail, calendar events, voice mails, appointments, and task items. A PIM application has the ability to send and receive data items via wireless network 200. PIM data items may be seamlessly integrated, synchronized, and updated via wireless network 200 with the mobile device subscriber's corresponding data items stored and/or associated with a host computer system. This functionality creates a mirrored host computer on mobile device 100 with respect to such items. This can be particularly advantageous where the host computer system is the mobile device subscriber's office computer system.

Additional applications may also be loaded onto mobile device 100 through network 200, auxiliary I/O subsystem 112, serial port 114, short-range communications subsystem 122, or any other suitable subsystem 124. This flexibility in application installation increases the functionality of mobile device 100 and may provide enhanced on-device functions, communication-related functions, or both. For example, secure communication applications may enable electronic commerce functions and other such financial transactions to be performed using mobile device 100.

Serial port 114 enables a subscriber to set preferences through an external device or software application and extends the capabilities of mobile device 100 by providing for information or software downloads to mobile device 100 other than through a wireless communication network. The alternate download path may, for example, be used to load an encryption key onto mobile device 100 through a direct and thus reliable and trusted connection to provide secure device communication.

Short-range communications subsystem 122 provides for communication between mobile device 100 and different systems or devices, without the use of network 200. For example, subsystem 122 may include an infrared device and associated circuits and components for short-range communication. Examples of short range communication include standards developed by the Infrared Data Association (IrDA), Bluetooth^{®}, and the 802.11 family (Wi-FI^{®}) of standards developed by IEEE.

In use, a received signal such as a text message, an e-mail message, or web page download is processed by communication subsystem 104 and input to microprocessor 102. Microprocessor 102 then processes the received signal for output to display 110 or alternatively to auxiliary I/O subsystem 112. A subscriber may also compose data items, such as e-mail messages, for example, using keyboard 116 in conjunction with display 110 and possibly auxiliary I/O subsystem 112. Auxiliary subsystem 112 may include devices such as: a touch screen, mousse, track ball, infrared fingerprint detector, or a roller wheel with dynamic button pressing capability. Keyboard 116 imay comprise an alphanumeric keyboard and/or telephone-type keypad. A composed item may be transmitted over network 200 through communication subsystem 104.

For voice communications, the overall operation of mobile device 100 is substantially similar, except that the received signals may be processed and output to speaker 118, and signals for transmission may be generated by microphone 120. Alternative voice or audio I/O subsystems, such as a voice message recording subsystem, may also be implemented on mobile device 100. Although voice or audio signal output is accomplished primarily through speaker 118, display 110 may also be used to provide additional information such as the identity of a calling party, duration of a voice call, or other voice call related information.

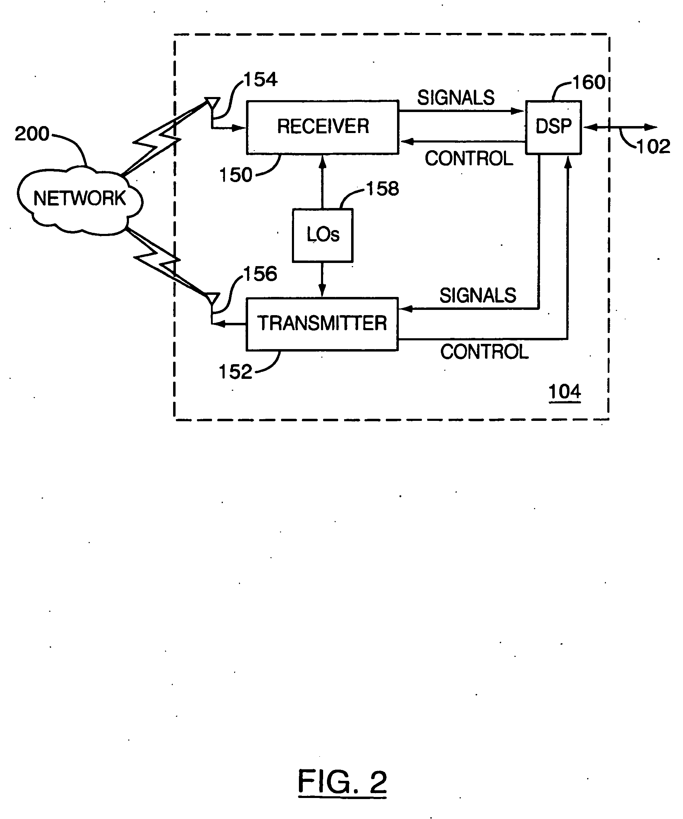

Referring now to FIG. 2, a block diagram of the communication subsystem component 104 of FIG. 1 is shown. Communication subsystem 104 comprises a receiver 150, a transmitter 152, one or more embedded or internal antenna elements 154, 156, Local Oscillators (LOs) 158, and a processing module such as a Digital Signal Processor (DSP) 160.

The particular design of communication subsystem 104 is dependent upon the network 200 in which mobile device 100 is intended to operate; thus, it should be understood that the design illustrated in FIG. 2 serves only as one example. Signals received by antenna 154 through network 200 are input to receiver 150, which may perform such common receiver functions as signals amplification, frequency down conversion, filtering, channel selection, and analog-to-digital (A/D) conversion. A/D conversion of a received signal allows more complex communication functions such as demodulation and decoding to be performed in DSP 160. In a similar manner, signals to be transmitted are processed, including modulation and encoding, by DSP 160. These DSP-processed signals are input to transmitter 152 for digital-to-analog (D/A) conversion, frequency up conversion, filtering, amplification and transmission over network 200 via antenna 156. DSP 160 not only processes communication signals, but also provides for receiver and transmitter control. For example, the gains applied to communication signals in receiver 150 and transmitter 152 may be adaptively controlled through automatic gain control algorithms implemented in DSP 160.

The wireless link between mobile device 100 and a network 200 may contain one or more different channels, typically different RF channels, and associated protocols used between mobile device 100 and network 200. A RF channel is a limited resource that must be conserved, typically due to limits in overall bandwidth and limited battery power of mobile device 100.

When mobile device 100 is fully operational, transmitter 152 may be typically keyed or turned on only when it is sending to network 200 and may otherwise be turned off to conserve resources. Similarly, receiver 150 may be periodically turned off to conserve power until it is needed to receive signals or information (if at all) during designated time periods.

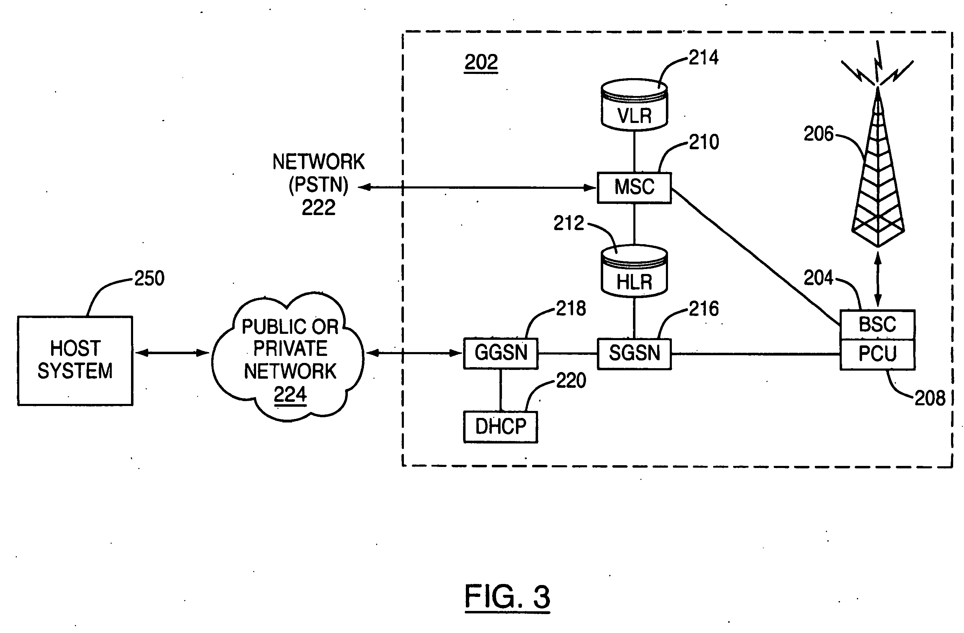

Referring now to FIG. 3, a block diagram of a node of a wireless network is shown as 202. In practice, network 200 comprises one or more nodes 202. Mobile device 100 communicates with a node 202 within wireless network 200. In the example implementation of FIG. 3, node 202 is configured in accordance with GPRS and GSM technologies. Node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through network 200.

In a GSM network, MSC 210 is coupled to BSC 204 and to a landline network, such as a Public Switched Telephone Network (PSTN) 222 to satisfy circuit switched requirements. The connection through PCU 208, SGSN 216 and GGSN 218 to the public or private network (Internet) 224 (also referred to herein generally as a shared network infrastructure) represents the data path for GPRS capable mobile devices. In a GSM network extended with GPRS capabilities, BSC 204 also contains a Packet Control Unit (PCU) 208 that connects to SGSN 216 to control segmentation, radio channel allocation and to satisfy packet switched requirements. To track mobile device location and availability for both circuit switched and packet switched management, HLR 212 is shared between MSC 210 and SGSN 216. Access to VLR 214 is controlled by MSC 210.

Station 206 is a fixed transceiver station. Station 206 and BSC 204 together form the fixed transceiver equipment. The fixed transceiver equipment provides wireless network coverage for a particular coverage area commonly referred to as a "cell". The fixed transceiver equipment transmits communication signals to and receives communication signals from mobile devices within its cell via station 206. The fixed transceiver equipment normally performs such functions as modulation and possibly encoding and/or encryption of signals to be transmitted to the mobile device in accordance with particular, usually predetermined, communication protocols and parameters, under control of its controller. The fixed transceiver equipment similarly demodulates and possibly decodes and decrypts, if necessary, any communication signals received from mobile device 100 within its cell. Communication protocols and parameters may vary between different nodes. For example, one node may employ a different modulation scheme and operate at different frequencies than other nodes.

For all mobile devices 100 registered with a specific network, permanent configuration data such as a user profile is stored in HLR 212. HLR 212 also contains location information for each registered mobile device and can be queried to determine the current location of a mobile device. MSC 210 is responsible for a group of location areas and stores the data of the mobile devices currently in its area of responsibility in VLR 214. Further VLR 214 also contains information on mobile devices that are visiting other networks. The information in VLR 214 includes part of the permanent mobile device data transmitted from HLR 212 to VLR 214 for faster access. By moving additional information from a remote HLR 212 node to VLR 214, the amount of traffic between these nodes can be reduced so that voice and data services can be provided with faster response times and at the same time requiring less use of computing resources.

SGSN 216 and GGSN 218 are elements added for GPRS support; namely packet switched data support, within GSM. SGSN 216 and MSC 210 have similar responsibilities within wireless network 200 by keeping track of the location of each mobile device 100. SGSN 216 also performs security functions and access control for data traffic on network 200. GGSN 218 provides internetworking connections with external packet switched networks and connects to one or more SGSN's 216 via an Internet Protocol (IP) backbone network operated within the network 200. During normal operations, a given mobile device 100 performs a "GPRS Attach" to acquire an IP address and to access data services. This normally is not present in circuit switched voice channels as Integrated Services Digital Network (ISDN) addresses are used for routing incoming and outgoing calls. Currently, all GPRS capable networks use private, dynamically assigned IP addresses, thus requiring a DHCP server 220 connected to the GGSN 218. There are many mechanisms for dynamic IP assignment, including using a combination of a Remote Authentication Dial-In User Service (RADIUS) server and DHCP server. Once the GPRS Attach is complete, a logical connection is established from a mobile device 100, through PCU 208, and SGSN 216 to an Access Point Node (APN) within GGSN 218. The APN represents a logical end of an IP tunnel that can either access direct Internet compatible services or private network connections. The APN also represents a security mechanism for network 200, insofar as each mobile device 100 must be assigned to one or more APNs and mobile devices 100 cannot exchange data without first performing a GPRS Attach to an APN that it has been authorized to use. The APN may be considered to be similar to an Internet domain name such as "myconnection.wireless.com".

Once the GPRS Attach is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 200. To maximize use of the PDP Contexts, network 200 will run an idle timer for each PDP Context to determine if there is a lack of activity. When a mobile device 100 is not using its PDP Context, the PDP Context can be deallocated and the IP address returned to the IP address pool managed by DHCP server 220.

Embodiments described herein are generally directed to a system and method that provides users of a camera-equipped mobile device with greater control over the processing of images captured with the camera of the mobile device.

Upon direction from the user that a picture is to be taken with the camera of the mobile device, an image is initially captured and temporarily stored at a first resolution. For example, the first resolution may be a maximum resolution at which images can be stored on the camera. This may be the highest resolution setting that might be specified by a user of the camera. The user is then queried for a specified, second resolution at which the image is to be subsequently stored, for example, in a non-volatile memory on the mobile device, where the second resolution is lower than or equal to the first resolution.

The term "resolution" will have a meaning known by persons skilled in the art. The term resolution may be used to generally refer to the amount of detail in an image that a camera can capture, and is typically measured in pixels. If an image is initially captured at a certain resolution, it may be subsequently stored at a lower resolution where, for example, a user does not anticipate that the stored image will be used in such a way that would require a level of detail associated with a higher resolution. By initially capturing images at a first (e.g. maximum) resolution, and allowing users to subsequently identify a second resolution at which the images are to be subsequently stored, greater flexibility may be afforded to the user. For example, this minimizes the likelihood that a user, after having directed a picture to be taken, will regret having captured an image at a resolution below that which they would have preferred

In one embodiment, the initially captured image is temporarily stored in a volatile memory on the mobile device (e.g. RAM 106 of mobile device 100, of FIG. 1). As a further example, the initially captured image may be temporarily stored in a cache memory.

In one embodiment, the image is subsequently stored at the user-specified second resolution in a non-volatile memory on or coupled to the mobile device (e.g. flash memory 108 of mobile device 100, of FIG. 1, or other memory card [not shown]). However, in a variant embodiment, the image may be transmitted to a remote device (e.g. by e-mail, or by using some messaging protocol or other transmission protocol) for storage, or for further processing.

According to the invention, the user is also queried for a compression level to be applied to the image to be subsequently stored. The captured image may initially be temporarily stored in an uncompressed form, for example. Storing the image in an uncompressed form will typically allow image quality to be conserved; however, significant memory requirements are generally required. Typically, some level of compression is applied to an image before it is more persistently stored in a memory, and the specific format in which the image is stored may depend on the level of compression to be applied. The available compression levels that may be applied to an image are typically identified to the user using ordered qualitative terms, which correspond to those levels. The compression level setting may be referred to by users as a "quality" setting, and may be identified using terms such as "Best", "Better", and "Good", or "Fine", "Standard", and "Economy", or some other set of terms denoting different quality levels, for example. Where the user specifies a compression level to be applied (e.g. by selecting a corresponding quality setting), the image is compressed accordingly and further stored, at the previously specified second resolution.

In one embodiment, at least a part of the image to be subsequently stored after its initial capture is displayed to the user, allowing the user to preview the image. The user may be queried for the resolution (and possibly the compression level) at which the image is to be stored while the user is previewing the image, through options provided in a dialog box displayed to the user, for example.

In a variant embodiment, an image, after its initial capture, may be stored more than once, possibly at one or more different resolutions, and possibly in one or more different memories, as may be directed by the user.

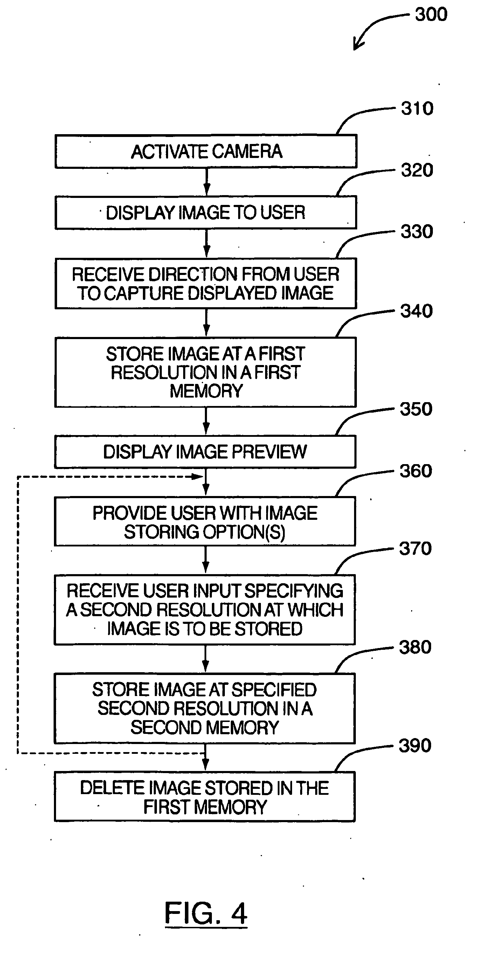

Referring now to FIG. 4, a flowchart illustrating acts of a method of processing images captured using a camera-equipped mobile device in accordance with at least one embodiment is shown generally as 300. Additional details of some of the features described below in respect of the acts of method 300 may be described earlier in the present specification.

In one embodiment, the acts of method 300 are performed at the mobile device by a camera application that executes and resides on the mobile device (e.g. mobile device 100 of FIG. 1). The application need not be a stand-alone application, and the functionality described herein may be implemented in one or more applications executing and residing on the mobile device.

At act 310, a camera (e.g. digital camera 125 of FIG. 1) on the mobile device is activated by the user, triggered by the execution of the camera application, for example. The user may activate the camera by selecting an application icon or a menu option, or by pressing a pre-programmed key or button, for example.

At act 320, images are displayed on a display (e.g. display 110 of FIG. 1) of the mobile device, which acts as a digital viewfinder for the camera. In use, when a desired image appears in the display, the user may direct that the displayed image be captured by the camera, by pressing a button or key configured for that purpose, or by otherwise submitting a command to capture the displayed image.

At act 330, a direction to capture the displayed image is received from the user of the mobile device. Accordingly, the image to be stored on the mobile device is identified.

At act 340, the image displayed on the display when the direction is received from the user at act 330 is temporarily stored in a first memory on the mobile device, waiting to be further processed. According to the invention, the first memory is a volatile memory (e.g. RAM 106 of FIG. 1, or a cache memory) on the mobile device.

The image is stored in the first memory at a first resolution associated with the camera of the mobile device at act 340. The first resolution at which the image is stored in the first memory may be the maximum possible resolution at which the camera can capture an image, which may or may not depend on the values of configurable settings for the camera. Alternatively, the first resolution at which the image is stored in the first memory may be the highest resolution that the user would be able to identify (e.g. at act 370 described below) as the selected resolution at which the image is to be stored in a second memory, as may be defined by the user in configurable settings for the camera. In the latter example, the first resolution as defined therein might be less than the maximum possible resolution at which the camera can capture the image (e.g. when the image stored in the first memory may also be further processed for a purpose other than storage in the second memory). The first resolution at which the image is stored in the first memory may be defined differently in variant embodiments..

As a further example, in a variant embodiment, the first resolution may be computed dynamically as a function of the amount of memory available in the first memory at the time the camera is to capture the image. For example, the first resolution may be a maximum resolution at which an image can be stored on the camera at the time the image is captured, based on an amount of first memory available at the time the image is captured.

At act 350, at least a part of the image stored in the first memory, identified for subsequent storage in the second memory of the mobile device by the user, is displayed to the user as an image preview on the display of the mobile device.

At act 360, the user is provided with at least one image storing option. In exemplary embodiments described herein, an option for specifying a second resolution at which the image is to be stored in a second memory is provided to the user at this act. The second resolution is less than or equal to the first resolution. In one embodiment, the second memory is a non-volatile memory on (or coupled to) the mobile device. In that case, the user is effectively selecting the resolution at which the image is to be saved on the mobile device. However, in variant embodiments, the second memory may be provided on a remote device, in which case the mobile device is configured to transmit the image to the remote device for storage [act not shown].

In one embodiment, the image storing option(s) provided to the user at act 360 is displayed using a dialog box or window, or other area within the display of the mobile device, along with the image preview displayed at act 350. Controls may be displayed for this purpose, which may be set by the user using an input mechanism such as a track wheel, track ball, mouse, touch screen, voice command, pre-programmed keys or buttons, or other mechanisms provided by the mobile device, as known in the art. The user may be required to navigate through one or more menus to select the desired option(s).

Where multiple image storing options are provided, they may be provided simultaneously using a single dialog box or window, or other area within the display of the mobile device, or sequentially using a series of dialog boxes or windows, for example.

Other user controls will also be typically provided with the image storing options. For example, controls may be provided to allow the user to initiate the saving of the image, delete the image (in which case the flow of method acts may proceed directly to act 390 [flow not shown] after the direction to delete the image is received), send the image to a recipient, associate the image with a contact, save the image as a background picture, designate a file name for the image, and select a folder for storage. Controls that allow users to edit the image prior to storage (e.g. to alter the size, shape, color and/or aspect ratio of the image), and possibly provide a preview of the post-edited image; may also be provided in certain embodiments. It will be understood by persons skilled in the art that the foregoing options and controls are described for illustrative purposes only, and different and/or other options and controls may be provided in variant embodiments.

At act 370, input from the user specifying the second resolution at which the image is to be stored in the second memory in response to the options provided at act 360 is received.

At act 380, the image stored in the first memory at act 340 is stored at the second resolution specified at act 370 in the second memory. In one embodiment, the second memory is a non-volatile memory on or coupled to the mobile device (e.g. flash memory 108 of FIG. 1, a memory card, or other removable storage device or memory).

It will be understood by persons skilled in the art that the first memory and the second memory as described herein may reside on the same physical memory device, in certain embodiments.

In embodiments where an option to not store the image in the second memory (e.g. to delete the captured image) is provided, and where it is determined that the user has selected the option to not store the image in the second memory, act 380 is not performed and the flow of method acts proceeds directly to act 390.

At act 390, the image stored in the first memory at act 340 is deleted. In embodiments where the first memory and the second memory reside on the same physical memory device, the image stored at act 380 (at the user-specified second resolution) may replace the image stored at act 340 in memory. It will also be understood by persons skilled in the art that the image data need not immediately be physically erased from memory at this act, as the data may simply be marked as deleted (e.g. allowing the data to be subsequently overwritten).

In a variant embodiment, acts 360 to 380 may be repeated so that the image stored in the first memory at act 340 is subsequently stored multiple times, possibly at one or more different resolutions and/or in one or more different memories, as may be directed by the user. For example, the user may wish to save the captured image in a high resolution for printing or transferring to a personal computing device (PC), as well as to save a copy of the image to be used as a background picture on the mobile device. In this regard, two copies of the image may be stored on the mobile device upon completion of two iterations of acts 360 to act 380 of method 300, namely the captured image stored at a higher resolution and the captured image stored at a lower resolution.

According to the invention, the image storing options provided at act 360 also comprise an option for specifying a compression level to be applied to the image to be stored in the second memory. The specified compression level would be applied to the image for storage in the second memory [act not shown], at the second resolution specified by the user at act 370.

According to the invention, the levels of one or more image storing options may be computed dynamically as a function of the amount of memory available in the second memory at the time the camera is to capture the image. For example, the compression level that may be selected by a user may be based on a maximum compression level at which an image can be stored on the camera at the time the image is captured, given the amount of second memory available at the time the image is captured. As a further example, the second resolution that may be selected by a user may be based on a maximum resolution level at which an image can be stored on the camera at the time the image is captured, given the amount of second memory available at the time the image is captured.

As a further example, if both the compression level and resolution may be specified by a user, then the user-selectable options presented to the user may be dependent on the amount of second memory available at the time the image is captured. For example, if a specific second resolution has been selected by the user, only options associated with the compression levels that can be accommodated given the current amount of second memory available may be presented for selection by the user. Conversely, if a specific compression level has been selected by the user, only options associated with the second resolutions that can be accommodated given the current amount of second memory available may be presented for selection by the user.

The embodiments described herein shall not be limited to the storage in a first memory of a single still image captured with the camera, and subsequent storage of the image in a second memory. In variant embodiments, multiple images may be initially captured and stored in the first memory (e.g. multiple still images captured in series, a stream of images or video data), after which the user-identified second resolution (and possibly compression level) may be similarly applied to all such images and stored accordingly in the second memory.

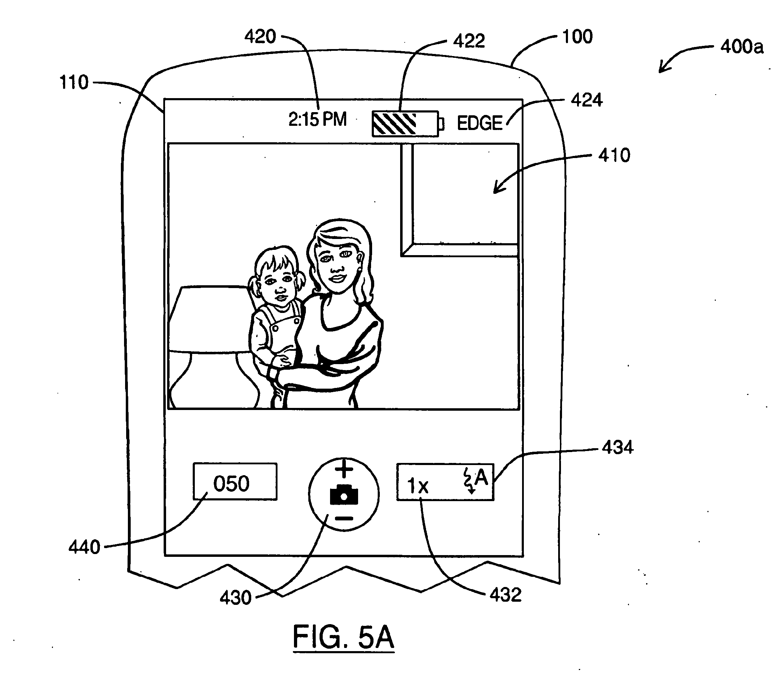

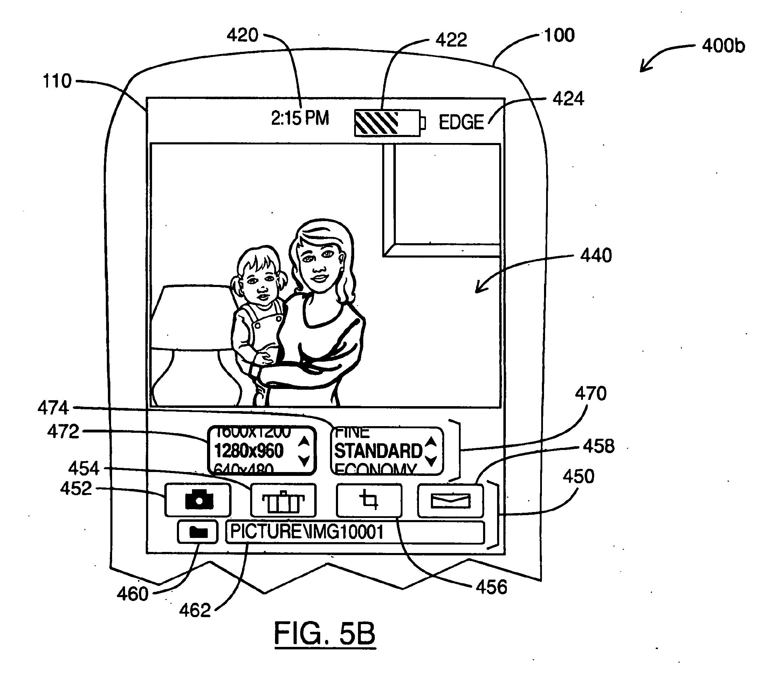

Referring now to FIGS. 5A and 5B, screenshots of a user interface displayed to a user of a camera-equipped mobile device in one exemplary implementation of an embodiment of the method of FIG. 4 are shown generally as 400a and 400b respectively.

In the example of FIG. 5A, screenshot 400a illustrates a user interface displayed in a display 110 of a mobile device 100, where the camera of mobile device 100 has been activated. In display 110, there is shown a displayed image 410 as seen by the user directing the camera lens at the subject(s) of the picture to be taken. This user interface is displayed prior to receiving a direction from the user to capture the displayed image 410. Above the displayed image 410 are general indicators, including for example, time 420, battery strength 422, and network indicator 424. Other general indicators, comprising a new voicemail icon and/or a new email icon for example (not shown), may also be provided. A zoom control 430 and zoom indicator 432, as well as a flash indicator 434, is also provided. An image count indicator 440 that estimates the number of images that may still be stored on the device, potentially based on a default resolution or compression level setting, or on the resolution or compression level last identified by the user for example, is also provided.

Screenshot 400b illustrates a user interface displayed in the display 110 of mobile device 100 after a direction to capture the displayed image 410 of FIG. 5A is received from the user. The captured image 440 is displayed in an image preview to the user. Controls 450 are displayed to the user, including a control 452 that allows the user to direct the captured image 440 to be saved, a control 454 that allows the user to direct the captured image 440 to be deleted without saving, a control 456 that allows the user to direct the captured image 440 to be associated with a contact or to be saved as a background picture for a home screen, a control 458 that allows the user to direct the captured image 440 to be sent as a message (e.g. an e-mail or SMS message), and file folder and filename options 460, 462.

Screenshot 400b also illustrates image storing options 470 provided to the user. These are provided by way of a control 472 that allows the user to specify one of several user-selectable second resolutions at which the captured image 440 is to be stored on mobile device 100, and in this example, a control 474 that allows the user to specify one of several user-selectable quality levels (each associated with a compression level) to be applied to the captured image 440 to be stored.

It will be understood by persons skilled in the art that the controls illustrated with reference to the foregoing examples are described for illustrative purposes only. Other variations are possible in variant implementations.

For example, it will be understood that options for any given control may be represented quantitatively or qualitatively. For example, representations may comprise entering or selecting a second resolution in terms of pixels (e.g. 800x600), a percentage of a maximum resolution (e.g. 80%), a storage size (e.g. 1024 kb), a number of megapixels (e.g. 1 MP), a corresponding print size (e.g. 4 in. by 6 in.), or using qualitative descriptors (e.g. describing potential uses for the image such as print, background, e-mail, etc.). Controls may also provide options in the form of drop down boxes, radio buttons, combo boxes, graphs, pictures, menus or other forms known in the art.

The acts of a method of processing images on a mobile device in accordance with any of the embodiments described herein may be provided as executable software instructions stored on computer-readable media, which may include transmission-type media.

The invention has been described with regard to a number of embodiments. However, it will be understood by persons skilled in the art that other variants and modifications may be made without departing from the scope of the invention as defined in the claims appended hereto.

## Claims

1. A method of processing images on a mobile device (100), the mobile device (100) providing a camera (125), the method comprising:
identifying (310, 320, 330) an image to be stored on the mobile device (100), said image being displayed on a display of the mobile device, and wherein a direction to capture said image is received;
storing (340) the image in a volatile memory (106) on the mobile device (100), wherein the image is stored at a first resolution associated with a first number of pixels;
providing (360), after storing the image in the volatile memory (106) on the mobile device (100) and prior to storing the image in the non-volatile memory, at least one image storing option comprising an option for specifying a second resolution associated with a second number of pixels at which the image is to be stored in a non-volatile memory (108), wherein the second resolution is less than or equal to the first resolution, and an option for specifying a compression level to be applied to the image to be stored in the non-volatile memory (108);
receiving (370) input specifying the second resolution at which the image is to be stored in the non-volatile memory (108) prior to storing the image in the non-volatile memory; and
storing (380) the image in the volatile memory at the second resolution in the non-volatile memory (108) after said input specifying the second resolution is received;
wherein:
the levels of one or more image storing options are computed dynamically as a function of the amount of non-volatile memory available at the time the camera is to capture the image,
the user-selectable options presented to the user are dependent on the amount of non-volatile memory available at the time the image is captured,
if a specific second resolution is selected by the user, only options associated with the compression levels that can be accommodated given the current amount of non-volatile memory available are presented for selection by the user, and
if a specific compression level is selected by the user, only options associated with second resolutions that can be accommodated given the current amount of non-volatile memory available are presented for selection by the user.

2. The method of claim 1, wherein the first resolution is a maximum resolution.

3. The method of claim 2, wherein the maximum resolution is based on an amount of the volatile memory (106) available on the mobile device (100) when identifying the image.

4. The method of claim 1, 2 or 3, wherein the volatile memory is a cache memory.

5. The method of any one of the preceding claims, wherein the non-volatile memory (108) is on the mobile device (100).

6. The method of any one of claims 1 to 4, wherein the non-volatile memory is on a remote device, and wherein the method further comprises transmitting the image to the remote device for storage.

7. The method of any one of the preceding claims, wherein the input received further specifies the compression level to be applied to the image to be stored in the non-volatile memory (108), wherein the method further comprises applying the specified compression level to the image for storage at the second resolution in the non-volatile memory (108).

8. The method of any one of the preceding claims, further comprising displaying (350) at least a part of the image to be stored in the non-volatile memory (108) after identifying (310, 320, 330) the image.

9. The method of claim 8, wherein the at least one image storing option is provided while the at least a part of the image to be stored in the non-volatile memory (108) is displayed.

10. The method of any one of the preceding claims, wherein the at least one image storing option is provided using a dialog box that is displayed.

11. The method of any one of the preceding claims, further comprising activating (310) the camera (125) of the mobile device (100), displaying (320) an image on a display (110) of the mobile device (100), and receiving (330) a direction to capture the image displayed on the display (110) for storage on the mobile device (100).

12. The method of any one of the preceding claims, wherein the providing (360) and receiving (370) acts are repeated such that input is received that specifies that the image is to be additionally stored in at least one of a different resolution associated with a different number of pixels and a different memory, and wherein the method further comprises additionally storing the image in the at least one of the different resolution and the different memory.

13. The method of any one of the preceding claims, further comprising providing an option to not store the image in the non-volatile memory (108) and determining if the option to not store the image in the non-volatile memory (108) is selected, wherein the act of storing (380) the image at the second resolution in the non-volatile memory (108) is not performed if it is determined that the option to not store the image in the non-volatile memory (108) is selected.

14. The method of any one of the preceding claims, further comprising deleting (390) the image stored in the volatile memory (106) of the mobile device (100).

15. A computer-readable medium comprising instructions executable on a processor (102) of a mobile device (100) wherein the instructions, when executed by the processor (102), cause the mobile device (100) to perform the acts of the method as claimed in any one of the preceding claims.

16. A system for processing images on a mobile device (100), the mobile device (100) comprising a processor (102), at least first and second memories (106, 108), and a camera (125), the system configured to execute an application programmed to cause the system to perform the acts of the method as claimed in any one of claims 1 to 14.

17. A mobile device (100) having the system for processing images of claim 16.

## Patentansprüche

1. Verfahren zur Verarbeitung von Bildern auf einem Mobilgerät (100), wobei das Mobilgerät (100) über eine Kamera (125) verfügt, das Verfahren umfassend:
das Identifizieren (310, 320, 330) eines auf dem Mobilgerät (100) zu speichernden Bilds, wobei das Bild auf einem Display des Mobilgeräts angezeigt wird und wobei ein Befehl zum Aufnehmen des Bilds empfangen wird;
das Speichern (340) des Bilds in einem flüchtigen Speicher (106) auf dem Mobilgerät (100), wobei das Bild mit einer ersten Auflösung gespeichert wird, die mit einer ersten Anzahl von Pixeln verknüpft ist;
das Bereitstellen (360), nach dem Speichern des Bilds in dem flüchtigen Speicher (106) auf dem Mobilgerät (100) und vor dem Speichern des Bilds im nicht-flüchtigen Speicher, von mindestens einer Bildspeicherungsoption, wozu eine Option zum Festlegen einer mit einer zweiten Anzahl von Pixeln verknüpften zweiten Auflösung, mit der das Bild in einem nicht-flüchtigen Speicher (108) gespeichert werden soll, wobei die zweite Auflösung geringer als oder gleich der ersten Auflösung ist, sowie eine Option zum Festlegen einer Komprimierungsstufe gehört, die auf das im nicht-flüchtigen Speicher (108) zu speichernden Bilds angewendet werden soll;
das Empfangen (370) einer Eingabe zur Festlegung der zweiten Auflösung, mit der das Bild in dem nicht-flüchtigen Speicher (108) gespeichert werden soll, vor dem Speichern des Bilds in dem nicht-flüchtigen Speicher; und
das Speichern (380) des in dem flüchtigen Speicher befindlichen Bilds mit der zweiten Auflösung in dem nicht-flüchtigen Speicher (108), nachdem die Eingabe zum Festlegen der zweiten Auflösung empfangen wurde;
wobei:
die Stufen von einer oder mehreren Bildspeicherungsoptionen dynamisch als eine Funktion der Menge des verfügbaren nicht-flüchtigen Speichers zu dem Zeitpunkt berechnet werden, zu dem die Kamera das Bild aufnehmen soll,
die vom Benutzer wählbaren und dem Benutzer präsentierten Optionen von der Menge des verfügbaren nicht-flüchtigen Speichers zu dem Zeitpunkt abhängen, zu dem das Bild aufgenommen werden soll,
wenn durch den Benutzer eine bestimmte zweite Auflösung gewählt wird, dem Benutzer nur solche Optionen zur Auswahl präsentiert werden, die mit den Komprimierungsstufen verknüpft sind, welche mit der aktuell gegebenen Menge an verfügbaren nicht-flüchtigem Speicher untergebracht werden können, und
wenn durch den Benutzer eine bestimmte Komprimierungsstufe gewählt wird, dem Benutzer nur solche Optionen zur Auswahl präsentiert werden, die mit zweiten Auflösungen verknüpft sind, welche mit der aktuell gegebenen Menge an verfügbaren nicht-flüchtigem Speicher untergebracht werden können.

2. Verfahren gemäß Anspruch 1, wobei die erste Auflösung eine maximale Auflösung ist.

3. Verfahren gemäß Anspruch 2, wobei die maximale Auflösung auf einer Menge des auf dem Mobilgerät (100) zum Zeitpunkt der Identifizierung des Bilds verfügbaren flüchtigen Speichers (106) basiert.

4. Verfahren gemäß den Ansprüchen 1, 2 oder 3, wobei der flüchtige Speicher ein Cache-Speicher ist.

5. Verfahren gemäß einem der vorherigen Ansprüche, wobei sich der nicht-flüchtige Speicher (108) auf dem Mobilgerät (100) befindet.

6. Verfahren gemäß einem der Ansprüche 1 bis 4, wobei der nicht-flüchtige Speicher sich auf einem entfernten Gerät befindet und wobei das Verfahren des Weiteren das Übertragen des Bilds zu dem entfernten Gerät zur Speicherung umfasst.

7. Verfahren gemäß einem der vorherigen Ansprüche, wobei die empfangene Eingabe des Weiteren die Komprimierungsstufe festlegt, die auf das im nicht-flüchtigen Speicher (108) zu speichernde Bild anzuwenden ist, wobei das Verfahren des Weiteren das Anwenden der festgelegten Komprimierungsstufe auf das Bild zur Speicherung mit der zweiten Auflösung in dem nicht-flüchtigen Speicher (108) umfasst.

8. Verfahren gemäß einem der vorherigen Ansprüche, des Weiteren umfassend das Anzeigen (350) von mindestens einem Teil des im nicht-flüchtigen Speicher (108) zu speichernden Bilds, nachdem das Bild identifiziert (310, 320, 330) wird.

9. Verfahren gemäß Anspruch 8, wobei die mindestens eine Bildspeicheroption bereitgestellt wird, während der mindestens eine Teil des im nicht-flüchtigen Speicher (108) zu speichernden Bilds angezeigt wird.

10. Verfahren gemäß einem der vorherigen Ansprüche, wobei die mindestens eine Bildspeicheroption mithilfe eines angezeigten Dialogfelds bereitgestellt wird.

11. Verfahren gemäß einem der vorherigen Ansprüche, des Weiteren umfassend das Aktivieren (310) der Kamera (125) des Mobilgeräts (100), das Anzeigen (320) eines Bilds auf einem Display (110) des Mobilgeräts (100) und das Empfangen (330) eines Befehls zum Aufzeichnen des auf dem Display (110) angezeigten Bilds zur Speicherung auf dem Mobilgerät (100).

12. Verfahren gemäß einem der vorherigen Ansprüche, wobei die Schritte des Bereitstellens (360) und des Empfangens (370) wiederholt werden, so dass eine Eingabe empfangen wird, welche festlegt, dass das Bild zusätzlich mit mindestens einem von einer anderen Auflösung, die mit einer anderen Anzahl von Pixeln verknüpft ist, und einem anderen Speicher gespeichert werden soll, wobei das Verfahren des Weiteren das zusätzliche Speichern des Bilds mit dem mindestens einen der anderen Auflösung und des anderen Speichers umfasst.

13. Verfahren gemäß einem der vorherigen Ansprüche, des Weiteren umfassend das Bereitstellen einer Option zum Nichtspeichern des Bilds in dem nicht-flüchtigen Speicher (108) und das Ermitteln, ob die Option zum Nichtspeichern des Bilds im nicht-flüchtigen Speicher (108) gewählt wird, wobei der Schritt des Speicherns (380) des Bilds mit der zweiten Auflösung in dem nicht-flüchtigen Speicher (108) nicht durchgeführt wird, wenn ermittelt wird, dass die Option zum Nichtspeichern des Bilds im nicht-flüchtigen Speicher (108) gewählt wird.

14. Verfahren gemäß einem der vorherigen Ansprüche, des Weiteren umfassend das Löschen (390) des im flüchtigen Speicher (106) des Mobilgeräts (100) gespeicherten Bilds.

15. Computerlesbares Medium, das Anweisungen enthält, die auf einem Prozessor (102) eines Mobilgeräts (100) ausführbar sind, wobei die Anweisungen bei Ausführung durch den Prozessor (102) das Mobilgerät (100) dazu bringen, die Schritte des Verfahrens gemäß einem der vorherigen Ansprüche durchzuführen.

16. System zum Verarbeiten von Bildern auf einem Mobilgerät (100), wobei das Mobilgerät (100) einen Prozessor (102), mindestens einen ersten und einen zweiten Speicher (106, 108) und eine Kamera (125) umfasst, wobei das System dafür konfiguriert ist, eine Anwendung auszuführen, die so programmiert ist, dass sie das System dazu bringt, die Schritte des Verfahrens gemäß einem der Ansprüche 1 bis 14 auszuführen.

17. Mobilgerät (100), welches über das System zur Verarbeitung von Bildern gemäß Anspruch 16 verfügt.

## Revendications

1. Un procédé pour traiter des images sur un dispositif mobile (100), le dispositif mobile (100) fournissant un appareil photo (125), le procédé comportant :
identifier (310, 320, 330) une image devant être stockée sur le dispositif mobile (100), ladite image étant affichée sur un affichage du dispositif mobile, et où une instruction pour capturer ladite image est reçue ;
stocker (340) l'image dans une mémoire volatile (106) sur le dispositif mobile (100), où l'image est stockée à une première résolution associée à un premier nombre de pixels ;
fournir (360), après avoir stocké l'image dans la mémoire volatile (106) sur le dispositif mobile (100) et avant de stocker l'image dans la mémoire non volatile, au moins une option de stockage d'image comportant une option pour spécifier une deuxième résolution associée à un deuxième nombre de pixels à laquelle l'image doit être stockée dans une mémoire non volatile (108), où la deuxième résolution est inférieure ou égale à la première résolution, et une option pour spécifier un niveau de compression à appliquer à l'image devant être stockée dans la mémoire non volatile (108) ;
recevoir (370) une entrée spécifiant la deuxième résolution à laquelle l'image doit être stockée dans la mémoire non volatile (108) avant de stocker l'image dans la mémoire non volatile ; et
stocker (380) l'image dans la mémoire volatile à la deuxième résolution dans la mémoire non volatile (108) après que ladite entrée spécifiant la deuxième résolution a été reçue ;
où :
les niveaux d'une ou plusieurs options de stockage d'image sont calculés de façon dynamique comme fonction de la quantité de mémoire non volatile disponible au moment où l'appareil photo va capturer l'image,
les options sélectionnables par l'utilisateur présentées à l'utilisateur dépendent de la quantité de mémoire non volatile disponible au moment où l'image est capturée,
si une deuxième résolution spécifique est sélectionnée par l'utilisateur, seules les options associées aux niveaux de compression qui peuvent être supportées en fonction de la quantité actuelle de mémoire non volatile disponible sont présentées pour être sélectionnées par l'utilisateur, et
si un niveau de compression spécifique est sélectionné par l'utilisateur, seules les options associées aux deuxièmes résolutions qui peuvent être supportées en fonction de la quantité actuelle de mémoire non volatile disponible sont présentées pour être sélectionnées par l'utilisateur.

2. Le procédé de la revendication 1, où la première résolution est une résolution maximale.

3. Le procédé de la revendication 2, où la résolution maximale est basée sur une quantité de la mémoire volatile (106) disponible sur le dispositif mobile (100) au moment de l'identification de l'image.

4. Le procédé de la revendication 1, 2 ou 3, où la mémoire volatile est une mémoire cache.

5. Le procédé de n'importe laquelle des revendications précédentes, où la mémoire non volatile (108) est sur le dispositif mobile (100).

6. Le procédé de n'importe laquelle des revendications 1 à 4, où la mémoire non volatile est sur un dispositif distant, et où le procédé comporte de plus transmettre l'image au dispositif distant pour stockage.

7. Le procédé de n'importe laquelle des revendications précédentes, où l'entrée reçue spécifie en outre le niveau de compression à appliquer à l'image devant être stockée dans la mémoire non volatile (108), où le procédé comporte de plus appliquer le niveau de compression spécifié à l'image pour stockage à la deuxième résolution dans la mémoire non volatile (108).

8. Le procédé de n'importe laquelle des revendications précédentes, comportant de plus afficher (350) au moins une partie de l'image devant être stockée dans la mémoire non volatile (108) après avoir identifié (310, 320, 330) l'image.

9. Le procédé de la revendication 8, où l'au moins une option de stockage d'image est fournie tandis que l'au moins une partie de l'image devant être stockée dans la mémoire non volatile (108) est affichée.

10. Le procédé de n'importe laquelle des revendications précédentes, où l'au moins une option de stockage d'image est fournie à l'aide d'une boîte de dialogue qui est affichée.

11. Le procédé de n'importe laquelle des revendications précédentes, comportant de plus activer (310) l'appareil photo (125) du dispositif mobile (100), afficher (320) une image sur un affichage (110) du dispositif mobile (100), et recevoir (330) une instruction de capturer l'image affichée sur l'affichage (110) pour stockage sur le dispositif mobile (100).

12. Le procédé de n'importe laquelle des revendications précédentes, où les actions de fournir (360) et de recevoir (370) sont répétées de telle sorte qu'une entrée soit reçue qui spécifie que l'image doit être également stockée dans au moins un élément parmi une résolution différente associée à un nombre différent de pixels et une mémoire différente, et où le procédé comporte de plus également stocker l'image dans l'au moins un élément parmi la résolution différente et la mémoire différente.

13. Le procédé de n'importe laquelle des revendications précédentes, comportant de plus fournir une option de ne pas stocker l'image dans la mémoire non volatile (108) et déterminer si l'option de ne pas stocker l'image dans la mémoire non volatile (108) est sélectionnée, où l'action de stocker (380) l'image à la deuxième résolution dans la mémoire non volatile (108) n'est pas réalisée s'il est déterminé que l'option de ne pas stocker l'image dans la mémoire non volatile (108) est sélectionnée.

14. Le procédé de n'importe laquelle des revendications précédentes, comportant de plus supprimer (390) l'image stockée dans la mémoire volatile (106) du dispositif mobile (100).

15. Un support lisible par ordinateur comportant des instructions exécutables sur un processeur (102) d'un dispositif mobile (100) où les instructions, lorsqu'exécutées par le processeur (102), amènent le dispositif mobile (100) à réaliser les actions du procédé tel que revendiqué dans n'importe laquelle des revendications précédentes.

16. Un système pour traiter des images sur un dispositif mobile (100), le dispositif mobile (100) comportant un processeur (102), au moins des première et deuxième mémoires (106, 108), et un appareil photo (125), le système étant configuré pour exécuter une application programmée pour amener le système à réaliser les actions du procédé tel que revendiqué dans n'importe laquelle des revendications 1 à 14.

17. Un dispositif mobile (100) ayant le système pour traiter des images de la revendication 16.
